# EUROPEAN PATENT APPLICATION

(11) **EP 4 446 390 A1**
(43) Date of publication of application: **16.10.2024**
(21) Application number: 23740509.7
(22) Date of filing: 13.01.2023
(51) Int. Cl.: C09J 127/16, C09J 101/28, C09J 129/04, C09J 139/06, C09J 9/02, H01M 4/66, H01M 10/0525

(54) **ADHESION-STRENGTHENING COMPOSITION, CURRENT COLLECTOR COMPRISING SAME, POSITIVE ELECTRODE INCLUDING SAME CURRENT COLLECTOR, METHOD FOR MANUFACTURING SAME POSITIVE ELECTRODE, AND LITHIUM SECONDARY BATTERY COMPRISING SAME POSITIVE ELECTRODE**

(30) Priority: 14.01.2022 KR 20220005882
(71) Applicant: LG Chem, Ltd., Yeongdeungpo-gu Seoul 07336 (KR)
(72) Inventor: SEO, Jung Hyun, Daejeon 34122 (KR); KIM, Min Soo, Daejeon 34122 (KR); JUNG, Soon Hwa, Daejeon 34122 (KR)
(74) Representative: Hoffmann Eitle
(86) International application number: PCT/KR2023/000679
(87) International publication number: WO 2023/136666

(57) **Abstract**

The present invention relates to an adhesion-strengthening composition capable of providing a positive electrode having excellent scratch resistance and adhesiveness and low interfacial resistance, a current collector comprising same, a positive electrode comprising the current collector, a method for manufacturing the positive electrode, and a lithium secondary battery comprising the positive electrode. Provided are an adhesion-strengthening composition comprising a fluorine-based polymer binder, a first water-soluble binder, a second water-soluble binder, and a conductive material, wherein the adhesion-strengthening composition comprises the fluorine-based polymer binder, the first water-soluble binder, and the second water-soluble binder in a specific content; a current collector comprising same; a positive electrode comprising the current collector; a method for manufacturing the positive electrode; and a lithium secondary battery comprising the positive electrode.

## Description

### TECHNICAL FIELD

### Cross-reference to Related Applications

This application claims the benefit of Korean Patent Application No. 10-2022-0005882, filed on January 14, 2022, in the Korean Intellectual Property Office, the disclosure of which is incorporated herein in its entirety by reference.

### Technical Field

The present invention relates to an adhesion enhancing composition capable of providing a positive electrode having excellent scratch resistance and adhesiveness, and low interfacial resistance, a collector including the same, a positive electrode including the collector, a method for manufacturing the positive electrode, and a lithium secondary battery including the positive electrode.

### BACKGROUND ART

Recently, there has been a rising demand for high-capacity, high-output, and high-stability lithium secondary batteries as an application area of lithium secondary batteries has rapidly expanded to power storage supply of large-area devices, such as automobiles and power storage devices, as well as power supply of electronic devices such as electrical, electronic, communication, and computer devices.

The lithium secondary batteries are generally manufactured in a way that a slurry in which a positive electrode active material capable of intercalating and deintercalating lithium ions or a negative electrode active material capable of absorbing and desorbing lithium ions, and optionally a binder and a conductive material are mixed is applied to each of a positive electrode collector and a negative electrode collector, and a solvent is removed by heat or the like to manufacture a positive electrode and a negative electrode, and the positive electrode and the negative electrode are stacked on both sides of a separator to form an electrode assembly having a predetermined shape, and then the electrode assembly and a non-aqueous electrolyte are inserted into a battery case.

Meanwhile, the manufacturing of the positive electrode and the negative electrode requires energy to remove the solvent, resulting in high costs, making it difficult to improve productivity, and accordingly, a dry manufacturing method in which each active material is placed on a collector in the form of a film and subjected to passing through a pressing roll has been proposed.

However, when an electrode active material is applied onto a collector in a dry method without a solvent in the case of a high-loading electrode, adhesion between the collector and an electrode layer is weak, and thus, a method of providing a primer layer capable of enhancing the adhesion between the collector and the electrode layer has been suggested.

The primer layer is typically composed of a binder and a conductive material, and the binder melts upon high-temperature roll pressing to secure adhesion and the conductive material serves to lower interfacial resistance. However, when the primer layer is composed of only a binder and a conductive material, the primer layer has weak scratch resistance, resulting in poor physical properties, and when a polymer material is added to make up for the downside, degradation in adhesion or an increase in interfacial resistance is caused.

### [Related Art Document]

### [Patent Document]

KR10-2020-0017821A

### DISCLOSURE OF THE INVENTION

### TECHNICAL PROBLEM

The present invention is devised to address the limitations of the related art, and thus, an aspect of the present invention provides an adhesion enhancing composition capable of forming an adhesion enhancing layer having excellent adhesion, low interfacial resistance, and excellent scratch resistance.

In addition, another aspect of the present invention provides a collector including an adhesion enhancing layer formed from the adhesion enhancing composition, and thus having excellent adhesion and scratch resistance, and low interfacial resistance.

In addition, another aspect of the present invention provides a positive electrode provided with a positive electrode active material layer on the collector.

In addition, another aspect of the present invention provides a method for manufacturing a positive electrode provided with a positive electrode active material layer on an adhesion enhancing layer of the collector.

In addition, another aspect of the present invention provides a lithium secondary battery including the positive electrode.

### TECHNICAL SOLUTION

In order to address the above-described tasks, the present invention provides an adhesion enhancing composition capable of forming an adhesion enhancing layer having excellent adhesion, low interfacial resistance, and excellent scratch resistance, a collector including the same, a positive electrode including the collector and a positive electrode active material layer, wherein the positive electrode active material layer is provided on an adhesion enhancing layer of the collector, a method for manufacturing the positive electrode, and a lithium secondary battery including the positive electrode, a negative electrode, a separator interposed between the positive electrode and the negative electrode, and an electrolyte.
(1) According to an aspect of the present invention, there is provided an adhesion enhancing composition including a fluorine-based polymer binder, a first water-soluble binder, a second water-soluble binder, and a conductive material, wherein the first water-soluble binder is carboxymethylcellulose (CMC), the second water-soluble binder is at least one type selected from polyvinylpyrrolidone (PVP) and polyvinyl alcohol (PVA), the adhesion enhancing composition includes the fluorine-based polymer binder in an amount of 40 wt% or greater with respect to 100 wt% of a solid content of the adhesion enhancing composition, and a weight ratio of the first water-soluble binder to a total amount of the first water-soluble binder and the second water-soluble binder is 0.2 to 0.8.
(2) The present invention provides the adhesion enhancing composition according to (1) above, wherein the adhesion enhancing composition includes the fluorine-based polymer binder in an amount of 40 wt% to 80 wt% with respect to 100 wt% of a solid content of the adhesion enhancing composition.
(3) The present invention provides the adhesion enhancing composition according to (1) or (2) above, wherein a weight ratio of the first water-soluble binder to a total amount of the first water-soluble binder and the second water-soluble binder is 0.2 to 0.7.
(4) The present invention provides the adhesion enhancing composition according to any one of (1) to (3) above, wherein a weight ratio of the fluorine-based polymer binder and the water-soluble binder is 2:1 to 10:1, and the water-soluble binder is a sum of the first water-soluble binder and the second water-soluble binder.
(5) The present invention provides the adhesion enhancing composition according to any one of (1) to (4) above, wherein the fluorine-based polymer binder is polyvinylidene fluoride (PVDF) or a vinylidene fluoride-hexafluoropropylene copolymer (PVDF-co-HFP).
(6) The present invention provides the adhesion enhancing composition according to any one of (1) to (5) above, wherein the fluorine-based polymer binder is a vinylidene fluoride-hexafluoropropylene copolymer (PVDF-co-HFP), and the fluorine-based polymer binder includes a vinylidene fluoride unit and a hexafluoropropylene unit in molecules in a molar ratio of 60:40 to 80:20.
(7) The present invention provides the adhesion enhancing composition according to any one of (1) to (6) above, wherein a weight ratio of the fluorine-based polymer binder and the conductive material is 4: 1 to 1: 4.
(8) According to another aspect of the present invention, there is provided a collector including a metal layer, and an adhesion enhancing layer provided on at least one surface of the metal layer, wherein the adhesion enhancing layer includes the adhesion enhancing composition of any one of (1) to (7) above.
(9) The present invention provides the collector according to (8) above, wherein the adhesion enhancing layer includes a fluorine-based polymer binder in an amount of 40 wt% or greater, and the adhesion enhancing layer includes a first water-soluble binder and a second water-soluble binder, wherein a weight ratio of the first water-soluble binder to a total amount of the first water-soluble binder and the second water-soluble binder is 0.2 to 0.8.
(10) According to another aspect of the present invention, there is provided a positive electrode including the collector of (8) or (9) above and a positive electrode active material layer, wherein the positive electrode active material layer is provided on an adhesion enhancing layer of the collector.
(11) The present invention provides the positive electrode according to (10) above, wherein the positive electrode active material layer includes lithium iron phosphate.
(12) According to another aspect of the present invention, there is provided a method for manufacturing the positive electrode of (10) or (11) above, which includes steps of: applying an adhesion enhancing composition including a solvent, a fluorine-based polymer binder, a first water-soluble binder, a second water-soluble binder, and a conductive material on at least one surface of a conductive metal, and drying the adhesion enhancing composition to form an adhesion enhancing layer, and placing a positive electrode active material thin film on the adhesion enhancing layer and roll pressing the positive electrode active material thin film, wherein the first water-soluble binder is carboxymethylcellulose (CMC), the second water-soluble binder is at least one type selected from polyvinylpyrrolidone (PVP) and polyvinyl alcohol (PVA), the adhesion enhancing composition includes the fluorine-based polymer binder in an amount of 40 wt% or greater with respect to 100 wt% of a solid content of the adhesion enhancing composition, and a weight ratio of the first water-soluble binder to a total amount of the first water-soluble binder and the second water-soluble binder is 0.2 to 0.8.
(13) The present invention provides the method according to (12) above, wherein the roll pressing is performed at a temperature higher than a melting point of the fluorine-based polymer binder.
(14) The present invention provides the method according to (12) or (13) above, wherein the fluorine-based polymer binder is polyvinylidene fluoride (PVDF) or a vinylidene fluoride-hexafluoropropylene copolymer (PVDF-co-HFP) .
(15) The present invention provides the method according to any one of (12) to (14) above, wherein the positive electrode active material is lithium iron phosphate.
(16) According to another aspect of the present invention, there is provided a lithium secondary battery including the positive electrode of (10) above, a negative electrode, a separator interposed between the positive electrode and the negative electrode, and an electrolyte.

### ADVANTAGEOUS EFFECTS

An adhesion enhancing composition according to the present invention includes a fluorine-based polymer binder in a specific amount and includes the first water-soluble binder and the second water-soluble binder such that a specific ratio between the two is satisfied, and may thus provide an adhesion enhancing layer having excellent adhesion and scratch resistance, and low interfacial resistance.

In addition, a collector according to the present invention includes a metal layer, and an adhesion enhancing layer formed from the adhesion enhancing composition provided on at least one surface of the metal layer, and may thus have excellent adhesion, low interfacial resistance, and improved scratch resistance as well.

In addition, a positive electrode according to the present invention includes an adhesion enhancing layer between a metal layer and a positive electrode active material layer, and may thus have excellent adhesion and scratch resistance, and low interfacial resistance to exhibit excellent battery properties.

In addition, a method for manufacturing a positive electrode according to the present invention may manufacture a positive electrode having excellent adhesion and low interfacial resistance, and excellent scratch resistance even though the method manufactures a positive electrode through a dry method using roll pressing without a solvent by forming an adhesion enhancing layer on a metal foil and placing a positive electrode active material thin film on the adhesion enhancing layer.

In addition, a lithium secondary battery of the present invention includes the positive electrode according to the present invention, and may thus have excellent battery properties.

### MODE FOR CARRYING OUT THE INVENTION

Hereinafter, the present invention will be described in detail to aid in understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

### Adhesion enhancing composition

The present invention provides an adhesion enhancing composition capable of providing an adhesion enhancing layer securing excellent adhesion between a metal layer and a positive electrode active material layer with respect to a positive electrode, especially a positive electrode manufactured through a dry method without using a solvent in particular, and allowing low interfacial resistance and improved scratch resistance.

The adhesion enhancing composition according to an embodiment of the present invention may include a fluorine-based polymer binder, a first water-soluble binder, a second water-soluble binder, and a conductive material, wherein the first water-soluble binder may be carboxymethylcellulose (CMC), the second water-soluble binder may be at least one type selected from polyvinylpyrrolidone (PVP) and polyvinyl alcohol (PVA), the adhesion enhancing composition may include the fluorine-based polymer binder in an amount of 40 wt% or greater with respect to 100 wt% of a solid content of the adhesion enhancing composition, and a weight ratio of the first water-soluble binder to a total amount of the first water-soluble binder and the second water-soluble binder may be 0.2 to 0.8.

In general, an electrode is manufactured by forming an active material layer on at least one surface of a metal collector, and in the case of a dry method, an active material thin film is placed on at least one surface of a metal collector and manufactured through roll pressing. However, when manufacturing a high-loading positive electrode, the adhesion between the metal collector and the positive electrode active material layer is weak as no solvent is used, and accordingly, an electrode provided with a binder layer including a polymer binder and a conductive material as a primer layer between the metal collector and the positive electrode active material layer has been proposed. In this case, the polymer binder of the binder layer melts upon high-temperature roll pressing and provides adhesion between the metal collector and the positive electrode active material layer, and the conductive material serves to lower interfacial resistance by the binder layer, and when the polymer binder and the conductive material are only included, the positive electrode may have poor physical properties due to poor scratch resistance. Accordingly, when the polymer binder is added, scratch resistance may be improved, but an increase in interfacial resistance or degradation in adhesion may be caused.

The adhesion enhancing composition according to the present invention includes a fluorine-based polymer binder, a first water-soluble binder, a second water-soluble binder, and a conductive material, and includes the fluorine-based polymer binder in a specific amount and satisfies a specific ration between the first water-soluble binder and the second water-soluble binder, and may thus provide an adhesion enhancing layer having excellent adhesion, low interfacial resistance, and improved scratch resistance.

Hereinafter, the adhesion enhancing composition according to the present invention will be described in detail.

According to an embodiment of the present invention, the adhesion enhancing composition includes a fluorine-based polymer binder, and the fluorine-based polymer binder serves to provide adhesion of the adhesion enhancing composition. The adhesion enhancing composition may include the fluorine-based polymer binder in an amount of 40 wt% or greater with respect to 100 wt% of a solid content of the adhesion enhancing composition, and may specifically include the fluorine-based polymer binder in an amount of 40 wt% to 80 wt% with respect to 100 wt% of a solid content of the adhesion enhancing composition. In this case, excellent adhesion without an increase in the interfacial resistance of the adhesion enhancing composition containing the same may be provided.

The fluorine-based polymer binder may include any fluorine-based polymer binder commonly known in the art without limitation, but specifically, the fluorine-based polymer binder may be polyvinylidene fluoride (PVDF) or a polyvinylidene fluoride-hexafluoropropylene copolymer (PVDF-co-HFP), and more specifically, the fluorine-based polymer binder may be a polyvinylidene fluoride-hexafluoropropylene copolymer (PVDF-co-HFP), and may include a vinylidene fluoride unit and a hexafluoropropylene unit in molecules in a molar ratio of 60:40 to 80:20.

As another example, the fluorine-based polymer binder may be a polyvinylidene fluoride-hexafluoropropylene copolymer (PVDF-co-HFP), may include a vinylidene fluoride unit and a hexafluoropropylene unit in molecules in a molar ratio of 60:40 to 80:20, may have a melting temperature (Tm) of 100 °C to 170 °C or 100 °C to 150 °C, and may have a weight average molecular weight of 600,000 g/mol to 1,200,000 g/mol. When the fluorine-based polymer binder is a polyvinylidene fluoride-hexafluoropropylene copolymer (PVDF-co-HFP) under these conditions, adhesion and scratch resistance may be more excellent.

According to an embodiment of the present invention, the adhesion enhancing composition includes a first water-soluble binder and a second water-soluble binder along with a fluorine-based polymer binder, and in this case, a weight ratio of the first water-soluble binder to a total amount of the first water-soluble binder and the second water-soluble binder may be 0.2 to 0.8. Specifically, the weight ratio of the first water-soluble binder to the total amount of the first water-soluble binder and the second water-soluble binder (amount of the first water-soluble binder/[amount of the first water-soluble binder+amount of the second water-soluble binder]) may be 0.2 to 0.7, more specifically 0.2 to 0.6, even more specifically 0.25 to 0.5. In this case, scratch resistance may be improved without adversely affecting the interfacial resistance and adhesion of the adhesion enhancing composition including the same.

As another example, as the adhesion enhancing composition includes the fluorine-based polymer binder, the first water-soluble binder, and the second water-soluble binder to satisfy the above conditions, a weight ratio of the fluorine-based polymer binder and the water-soluble binder may satisfy 2:1 to 10:1, specifically 2:1 to 8:1, more specifically 3:1 to 8:1, even more specifically 3.5: 1 to 7.5: 1, and in this case, the water-soluble binder may include a first water-soluble binder and a second water-soluble binder. In this case, it may be beneficial in securing better contact strength and scratch resistance and lower interfacial resistance of the adhesion enhancing composition.

According to an embodiment of the present invention, the adhesion enhancing composition includes a conductive material, and the conductive material serves to lower interfacial resistance of the adhesion enhancing composition, and any conductive material may be used without particular limitation as long as it has electronic conductivity without causing chemical changes, and specifically the conductive material may be graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; conductive tubes such as carbon nanotubes; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used.

As another example, the adhesion enhancing composition includes a fluorine-based polymer binder and a conductive material, and a weight ratio of the fluorine-based polymer binder and the conductive material may be 4:1 to 1:4 or 7:3 to 4:6, and in this case, it may be beneficial for improvements in the adhesion and interfacial resistance of the adhesion enhancing composition.

In addition, according to an embodiment of the present invention, the adhesion enhancing composition includes a solvent, and the solvent may be a solvent commonly used in the art, and may be dimethyl sulfoxide (DMSO), isopropyl alcohol, ethyl alcohol, methyl alcohol, n-butyl alcohol, N-methylpyrrolidone (NMP), dimethylformamide (DMF), acetone, methyl ethyl ketone, methyl isobutyl ketone, water, or the like, and any one thereof or a mixture of two or more thereof may be used. The amount of the solvent to be used is sufficient if the solvent may dissolve or disperse the fluorine-based polymer binder, the first water-soluble binder, the second water-soluble binder, and the conductive material, and thereafter, have a viscosity which may exhibit excellent thickness uniformity upon application of the adhesion enhancing composition for preparing a collector.

### Collector

The present invention provides a collector including an adhesion enhancing layer securing excellent adhesion between a metal layer and a positive electrode active material layer with respect to a positive electrode, especially a positive electrode manufactured through a dry method without using a solvent in particular, and allowing low interfacial resistance and improved scratch resistance.

The collector according to an embodiment of the present invention may include a metal layer, and an adhesion enhancing layer provided on at least one surface of the metal layer, and the adhesion enhancing layer may include the adhesion enhancing composition.

As another example, the adhesion enhancing composition may include a fluorine-based polymer binder, a first water-soluble binder, a second water-soluble binder, and a conductive material, the first water-soluble binder may be carboxymethylcellulose (CMC), the second water-soluble binder may be at least one type selected from polyvinylpyrrolidone (PVP) and polyvinyl alcohol (PVA), the adhesion enhancing composition may include the fluorine-based polymer binder in an amount of 40 wt% or greater, and a weight ratio of the first water-soluble binder to a total amount of the first water-soluble binder and the second water-soluble binder may be 0.2 to 0.8.

In addition, the adhesion enhancing layer may have a thickness of 300 nm to 3000 nm, specifically a thickness of 400 nm to 1000 nm, and in this case, adhesion and scratch resistance may be excellent without increasing interfacial resistance.

In addition, the metal layer includes a conductive metal having high conductivity, and the conductive metal is not particularly limited as long as it is non-reactive in the voltage range of a battery, and for example, stainless steel, aluminum, nickel, titanium, fired carbon, or aluminum or stainless steel that is surface-treated with one of carbon, nickel, titanium, silver, and the like may be used. In addition, the metal layer may have a thickness of 3 um to 500 µm.

### Positive electrode

The present invention provides a positive electrode including the collector described above.

The positive electrode according to an embodiment of the present invention includes the collector, and a positive electrode active material layer, and the positive electrode active material layer may be provided on an adhesion enhancing layer of the collector.

In addition, the positive electrode active material layer may include a positive electrode active material, and the positive electrode active material may be one type selected from the group consisting of LiCoO₂, LiCoPO₄, LiNiO₂, LiₓNiₐCo_{b}M¹_{c}M²_{d}O₂ (M¹ and M² are each independently one type selected from the group consisting of Al, Mn, Cu, Fe, V, Cr, Mo, Ga, B, W, Mo, Nb, Mg, Hf, Ta, La, Ti, Sr, Ba, Ce, F, P, S, and Y, and 0.9≤x≤1.1, 0<a<1.0, 0<b<1.0, 0≤c<0.5, 0≤d<0.5, and a+b+c+d=1 are satisfied), LiMnO₂, LiMnO₃, LiMn₂O₃, LiMn₂O₄, LiMn₂₋ₑM³ₑO₂ (M³ is at least one type selected from the group consisting of Co, Ni, Fe, Cr, Zn, and Ta, and 0.01≤e≤0.1 is satisfied), Li₂Mn₃M⁴O₈ (M⁴ is at least one selected from the group consisting of Co, Ni, Fe, Cu and Zn), LiFePO₄, Li₂CuO₂, LiV₃O₈, V₂O₃, Cu₂V₂O₂, and lithium metal.

As another example, the positive electrode active material layer may include lithium iron phosphate, and the lithium iron phosphate may be LiFePO₄.

### Method for manufacturing a positive electrode

The present invention provides a method for manufacturing the positive electrode.

According to an embodiment of the present invention, the method for manufacturing the positive electrode may include steps of: applying the adhesion enhancing composition on at least one surface of the conductive metal and drying the resulting product to form an adhesion enhancing layer, and placing a positive electrode active material thin film on the adhesion enhancing layer and roll pressing the positive electrode active material thin film.

In this case, the adhesion enhancing composition, the conductive metal, and the positive electrode active material are as described above.

As another example, the method for manufacturing the positive electrode according to an embodiment of the present invention may be performed through a commonly known dry electrode manufacturing method, except that the method includes applying the adhesion enhancing composition on at least one surface of the conductive metal and drying the resulting product to form an adhesion enhancing layer.

In addition, the conductive metal may have increased adhesion by forming fine irregularities on a surface, and may be used in various forms such as a film, a sheet, a foil, a net, a porous body, a foam body, and a non-woven fabric body.

In addition, the applying may be performed using an appropriate amount, so that the thickness of the adhesion enhancing layer is within the range described above.

The drying may be performed at a temperature of 100 °C to 170 °C, specifically, 100 °C to 150 °C, or 100 °C to 130 °C, and the drying time is not particularly limited, but the drying may be performed for 1 minute to 5 minutes.

In addition, the roll pressing may be performed at a temperature higher than a melting point of the fluorine-based polymer binder, and may specifically be performed at a temperature of 100 °C to 170 °C, more specifically at a temperature of 100 °C to 150 °C, or at a temperature of 100 °C to 130 °C.

### Lithium secondary battery

The present invention provides a lithium secondary battery including the positive electrode described above.

According to an embodiment of the present invention, the lithium secondary battery may include the positive electrode, a negative electrode, a separator interposed between the positive electrode and the negative electrode, and an electrolyte. In addition, the lithium secondary battery may selectively further include a battery case for accommodating an electrode assembly composed of the positive electrode, the negative electrode, and the separator, and a sealing member for sealing the battery case.

According to an embodiment of the present invention, the negative electrode may include a negative electrode collector and a negative electrode active material layer positioned on the negative electrode collector.

According to an embodiment of the present invention, the negative electrode collector is not particularly limited as long as it has a high conductivity without causing a chemical change in a battery, and for example, copper, stainless steel, aluminum, nickel, titanium, baked carbon, copper or stainless steel that is surface-treated with one of carbon, nickel, titanium, silver, and the like, an aluminum-cadmium alloy, and the like may be used. In addition, the negative electrode collector may typically have a thickness of 3 um to 500 µm, and as in the case of the positive electrode collector, fine irregularities may be formed on a surface of the negative electrode collector to improve the adhesion of the negative electrode active material. For example, the negative electrode collector may be used in various forms such as a film, a sheet, a foil, a net, a porous body, a foam body, and a non-woven fabric body.

According to an embodiment of the present invention, the negative electrode active material layer may optionally include a binder and a conductive material in addition to the negative electrode active material.

According to an embodiment of the present invention, a compound capable of reversibly intercalating and deintercalating lithium may be used as the negative electrode active material. Specific examples thereof may include a carbonaceous material such as artificial graphite, natural graphite, graphitized carbon fiber, and amorphous carbon; a (semi)metal-based material alloyable with lithium such as Si, Al, Sn, Pb, Zn, Bi, In, Mg, Ga, Cd, an Si alloy, an Sn alloy, or an Al alloy; a (semi)metal oxide which may be doped or undoped with lithium such as SiOp (0<β<2), SnO₂, a vanadium oxide, and a lithium vanadium oxide; or a composite including the (semi)metal-based material and the carbonaceous material such as an Si-C composite or an Sn-C composite, and any one thereof or a mixture of two or more thereof may be used. In addition, a metallic lithium thin film may be used as the negative electrode active material. Additionally, as a carbon material, low-crystalline carbon, high-crystalline carbon, and the like may all be used. Typical examples of the low-crystalline carbon may be soft carbon and hard carbon, and typical examples of the high-crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes. The negative electrode active material may be included in an amount of 80 wt% to 99 wt% with respect to a total weight of the negative electrode active material layer.

According to an embodiment of the present invention, a binder of the negative electrode active material layer is a component that assists in binding between a conductive material, an active material, and a collector, and may be commonly added in an amount of 0.1 wt% to 10 wt% with respect to the total weight of the negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

According to an embodiment of the present invention, a conductive material of the negative electrode active material layer is a component for further improving the conductivity of a negative electrode active material, and may be added in an amount of 10 wt% or less, preferably 5 wt% or less, with respect to the total weight of the negative electrode active material layer. Such conductive agent is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; carbon fluoride; metal powder such as aluminum powder, and nickel powder; conductive whiskers such as zinc oxide whiskers and potassium titanate whiskers; conductive metal oxide such as titanium oxide; or polyphenylene derivatives, or the like may be used.

According to an embodiment of the present invention, the negative electrode may be manufactured by applying a composition for forming a negative electrode active material layer, which is prepared by dissolving or dispersing a negative electrode active material and optionally a binder and a conductive material in a solvent, on a negative electrode collector, followed by drying, or may be manufactured by casting a composition for forming a negative electrode active material layer on a separate support and then laminating a film separated from the support on the negative electrode collector.

According to an embodiment of the present invention, the separator is to separate the negative electrode and the positive electrode and to provide a movement path for lithium ions, and any separator may be used without particular limitation as long as it is typically used as a separator in a lithium secondary battery, and particularly, a separator having high moisture-retention ability for an electrolyte as well as low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer component may be used to secure heat resistance or mechanical strength, and the separator having a single layer or multilayer structure may be used.

According to an embodiment of the present invention, as the electrolyte, an organic liquid electrolyte, an inorganic liquid electrolyte, a solid polymer electrolyte, a gel-type polymer electrolyte, an inorganic solid electrolyte, a molten-type inorganic electrolyte, or the like that is usable in the manufacture of a lithium secondary battery may be used without particular limitation. As a specifically example, the electrolyte may include an organic solvent and a lithium salt.

According to an embodiment of the present invention, any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

According to an embodiment of the present invention, any compound may be used as the lithium salt without particular limitation as long as it may provide lithium ions used in a lithium secondary battery. To be specific, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N-, and as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used. The lithium salt may be preferably used in a concentration range of 0.1 M to 2.0 M. When the concentration of the lithium salt is in the above range, the electrolyte has suitable conductivity and viscosity, thereby exhibiting excellent performance, and lithium ions may effectively move.

According to an embodiment of the present invention, in addition to the above-described electrolyte components, for example, at least one additive selected from the group consisting of vinylene carbonate (VC), vinyl ethylene carbonate (VEC), fluoro ethylene carbonate (FEC), propane sultone (PS), 1,3-propane sultone (PRS), ethylene sulfate (Esa), succinonitrile (SN), adiponitrile (AN), hexane tricarbonitrile (HTCN), γ -butyrolactone, biphenyl (BP), cyclohexyl benzene (CHB), and tert-amyl benzene (TAB), or at least one additive such as a haloalkylene carbonate-based compound such as difluoroethylene carbonate, pyridine, triethylphosphite, triethanolamine, a cyclic ether, ethylenediamine, n-glyme, hexamethyl phosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, or aluminum trichloride may be further included in the electrolyte for the purpose of enhancing the lifetime characteristics of batteries, suppressing a reduction in battery capacity, enhancing the discharge capacity of batteries, and the like. In this case, the additive may be included in an amount of 0.1 wt% to 5 wt% with respect to a total weight of the electrolyte.

The lithium secondary battery including the positive electrode according to the present invention stably exhibits excellent capacity properties, output properties, and lifespan properties, and thus, are useful for portable devices such as a mobile phone, a notebook computer, and a digital camera, and in the field of electric cars such as a hybrid electric vehicle (HEV) and an electric vehicle (EV).

The outer shape of the lithium secondary battery of the present invention is not particularly limited, and thus a cylindrical shape using a can, a prismatic shape, a pouch shape, or a coin shape, may be used.

The lithium secondary battery according to the present invention may be used in a battery cell which is used as a power source for a small-sized device, and may also be preferably used as a unit cell for a medium- and large-sized battery module including a plurality of battery cells.

Accordingly, according to an embodiment of the present invention, a battery module including the lithium secondary battery as a unit cell, and a battery pack including the same are provided.

According to an embodiment of the present invention, the battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

Hereinafter, examples of the present invention will be described in detail in such a manner that it may easily be performed by a person with ordinary skill in the art to which the present invention pertains. The present invention may, however, be embodied in many different forms, and is not limited to Examples set forth herein.

### Example

### Preparation of adhesion enhancing composition

### Example 1

39.49 g of distilled water, 15.84 g of ethanol, 7.08 g of conductive material (Li-250, Denka, BET 58 m²/g) dispersion (solid content 20.0 wt%), 12.02 g of vinylidene fluoride-hexafluoropropylene copolymer (250 nm spherical particles, Tm = 100 °C, Mw = 1,000,000 g/mol, Solvey) solution (solid content 25.0 wt%), 19.67 g of carboxymethylcellulose (CMC) solution (solid content 1.5 wt%), and 5.90 g of polyvinylpyrrolidone (Mw = 10,000 g/mol) solution (solid content 5.0 wt%) were mixed to prepare an adhesion enhancing composition. In this case, the adhesion enhancing composition included the vinylidene fluoride-hexafluoropropylene copolymer in an amount of 59.97 wt% with respect to 100 wt% of the solid content thereof, and a weight ratio of the carboxymethylcellulose to a total amount of the carboxymethylcellulose and the polyvinylpyrrolidone was 0.50 (carboxycellulose g/[carboxycellulose + polyvinylpyrrolidone] g).

### Example 2

With respect to Example 1, an adhesion enhancing composition was prepared in the same manner as in Example 1, except that 5.90 g of polyvinyl alcohol (PVA500, Mw = 500 g/mol) solution (solid content 5.0 wt%) was used instead of the polyvinylpyrrolidone (Mw = 10,000 g/mol) solution. In this case, the adhesion enhancing composition included the vinylidene fluoride-hexafluoropropylene copolymer in an amount of 59.97 wt% with respect to 100 wt% of the solid content thereof, and a weight ratio of the carboxymethylcellulose to a total amount of the carboxymethylcellulose and the polyvinyl alcohol was 0.50 (carboxycellulose g/[carboxycellulose + polyvinyl alcohol] g).

### Example 3

36.66 g of distilled water, 15.75 g of ethanol, 8.03 g of conductive material (Li-250, Denka, BET 58 m²/g) dispersion (solid content 20.0 wt%), 13.73 g of vinylidene fluoride-hexafluoropropylene copolymer (250 nm spherical particles, Tm = 100 °C, Mw = 1,000,000 g/mol, Solvey) solution (solid content 25.0 wt%), 9.010 g of carboxymethylcellulose (CMC) solution (solid content 1.5 wt%), and 16.82 g of polyvinyl alcohol (PVA1500, Mw=1,500 g/mol) solution (solid content 2.0 wt%) were mixed to prepare an adhesion enhancing composition. In this case, the adhesion enhancing composition included the vinylidene fluoride-hexafluoropropylene copolymer in an amount of 57.07 wt% with respect to 100 wt% of the solid content thereof, and a weight ratio of the carboxymethylcellulose to a total amount of the carboxymethylcellulose and the polyvinyl alcohol was 0.29 (carboxycellulose g/[carboxycellulose + polyvinyl alcohol] g).

### Example 4

23.56 g of distilled water, 15.84 g of ethanol, 6.84 g of conductive material (Li-250, Denka, BET 58 m²/g) dispersion (solid content 20.0 wt%), 11.70 g of vinylidene fluoride-hexafluoropropylene copolymer (250 nm spherical particles, Tm = 100 °C, Mw = 1,000,000 g/mol, Solvey) solution (solid content 25.0 wt%), 19.110 g of carboxymethylcellulose (CMC) solution (solid content 1.5 wt%), and 22.95 g of polyvinyl alcohol (PVA1500, Mw=1,500 g/mol) solution (solid content 2.0 wt%) were mixed to prepare an adhesion enhancing composition. In this case, the adhesion enhancing composition included the vinylidene fluoride-hexafluoropropylene copolymer in an amount of 51.07 wt% with respect to 100 wt% of the solid content thereof, and a weight ratio of the carboxymethylcellulose to a total amount of the carboxymethylcellulose and the polyvinyl alcohol was 0.38 (carboxycellulose g/[carboxycellulose + polyvinyl alcohol] g).

### Example 5

30.94 g of distilled water, 15.84 g of ethanol, 6.84 g of conductive material (Li-250, Denka, BET 58 m²/g) dispersion (solid content 20.0 wt%), 11.87 g of vinylidene fluoride-hexafluoropropylene copolymer (250 nm spherical particles, Tm = 100 °C, Mw = 1,000,000 g/mol, Solvey) solution (solid content 25.0 wt%), 19.56 g of carboxymethylcellulose (CMC) solution (solid content 1.5 wt%), and 14.66 g of polyvinyl alcohol (M10-98, Mw=1000 g/mol) solution (solid content 2.0 wt%) were mixed to prepare an adhesion enhancing composition. In this case, the adhesion enhancing composition included the vinylidene fluoride-hexafluoropropylene copolymer in an amount of 55.34 wt% with respect to 100 wt% of the solid content thereof, and a weight ratio of the carboxymethylcellulose to a total amount of the carboxymethylcellulose and the polyvinyl alcohol was 0.50 (carboxycellulose g/[carboxycellulose + polyvinyl alcohol] g).

### Comparative Example 1

54.25 g of distilled water, 15.51 g of ethanol, 11.18 g of conductive material (Li-250, Denka, BET 58 m²/g) dispersion (solid content 20.0 wt%), and 19.06 g of vinylidene fluoride-hexafluoropropylene copolymer (250 nm spherical particles, Tm = 100 °C, Mw = 1,000,000 g/mol, Solvey) solution (solid content 25.0 wt%) were mixed to prepare an adhesion enhancing composition. In this case, the adhesion enhancing composition included the vinylidene fluoride-hexafluoropropylene copolymer in an amount of 68.06 wt% with respect to 100 wt% of a solid content thereof.

### Comparative Example 2

33.70 g of distilled water, 15.84 g of ethanol, 7.24 g of conductive material (Li-250, Denka, BET 58 m²/g) dispersion (solid content 20.0 wt%), 12.35 g of vinylidene fluoride-hexafluoropropylene copolymer (250 nm spherical particles, Tm = 100 °C, Mw = 1,000,000 g/mol, Solvey) solution (solid content 25.0 wt%), and 30.87 g of carboxymethylcellulose (CMC) solution (solid content 1.5 wt%) were mixed to prepare an adhesion enhancing composition. In this case, the adhesion enhancing composition included the vinylidene fluoride-hexafluoropropylene copolymer in an amount of 61.77 wt% with respect to 100 wt% of a solid content thereof.

### Comparative Example 3

38.32 g of distilled water, 15.83 g of ethanol, 20.30 g of conductive material (Li-250, Denka, BET 58 m²/g) dispersion (solid content 20.0 wt%), 1.66 g of vinylidene fluoride-hexafluoropropylene copolymer (250 nm spherical particles, Tm = 100 °C, Mw = 1,000,000 g/mol, Solvey) solution (solid content 25.0 wt%), 18.38 g of carboxymethylcellulose (CMC) solution (solid content 1.5 wt%), and 5.51 g of polyvinylpyrrolidone (Mw = 10,000 g/mol) solution (solid content 5.0 wt%) were mixed to prepare an adhesion enhancing composition. In this case, the adhesion enhancing composition included the vinylidene fluoride-hexafluoropropylene copolymer in an amount of 8.26 wt% with respect to 100 wt% of the solid content thereof, and a weight ratio of the carboxymethylcellulose to a total amount of the carboxymethylcellulose and the polyvinylpyrrolidone was 0.50 (carboxycellulose g/[carboxycellulose + polyvinylpyrrolidone] g).

### Comparative Example 4

34.47 g of distilled water, 12.13 g of ethanol, 5.42 g of conductive material (Li-250, Denka, BET 58 m²/g) dispersion (solid content 20.0 wt%), 9.12 g of vinylidene fluoride-hexafluoropropylene copolymer (250 nm spherical particles, Tm = 100 °C, Mw = 1,000,000 g/mol, Solvey) solution (solid content 25.0 wt%), 37.66 g of carboxymethylcellulose (CMC) solution (solid content 1.5 wt%), and 1.11 g of polyvinyl alcohol (PVA500, Mw=500 g/mol) solution (solid content 5.0 wt%) were mixed to prepare an adhesion enhancing composition. In this case, the adhesion enhancing composition included the vinylidene fluoride-hexafluoropropylene copolymer in an amount of 57.46 wt% with respect to 100 wt% of the solid content thereof, and a weight ratio of the carboxymethylcellulose to a total amount of the carboxymethylcellulose and the polyvinyl alcohol was 0.91 (carboxycellulose g/[carboxycellulose + polyvinyl alcohol] g).

### Comparative Example 5

55.93 g of distilled water, 15.83 g of ethanol, 7.55 g of conductive material (Li-250, Denka, BET 58 m²/g) dispersion (solid content 20.0 wt%), 12.83 g of vinylidene fluoride-hexafluoropropylene copolymer (250 nm spherical particles, Tm = 100 °C, Mw = 1,000,000 g/mol, Solvey) solution (solid content 25.0 wt%), 2.52 g of carboxymethylcellulose (CMC) solution (solid content 1.5 wt%), and 5.34 g of polyvinyl alcohol (PVA500, Mw=500 g/mol) solution (solid content 5.0 wt%) were mixed to prepare an adhesion enhancing composition. In this case, the adhesion enhancing composition included the vinylidene fluoride-hexafluoropropylene copolymer in an amount of 63.87 wt% with respect to 100 wt% of the solid content thereof, and a weight ratio of the carboxymethylcellulose to a total amount of the carboxymethylcellulose and the polyvinyl alcohol was 0.12 (carboxycellulose g/[carboxycellulose + polyvinyl alcohol] g).

### Manufacture of a collector and a positive electrode

### Example 6

The adhesion enhancing composition prepared in Example 1 was applied onto one surface of an aluminum foil having a thickness of 20 µm, and then dried at 130 °C for 30 minutes to manufacture a collector having an adhesion enhancing layer formed therein. In this case, the adhesion enhancing composition was used in an amount applied such that a thickness of the formed adhesion enhancing layer was 500 nm.

Thereafter, an LFP film was placed on the adhesion enhancing layer and roll pressed at 115 °C to prepare a positive electrode.

### Example 7

With respect to Example 6, a collector and a positive electrode were manufactured in the same manner as in Example 6, except that the adhesion enhancing composition prepared in Example 2 was used instead of the adhesion enhancing composition prepared in Example 1. In this case, the adhesion enhancing composition was used in an amount applied such that a thickness of the formed adhesion enhancing layer was 400 nm.

### Example 8

With respect to Example 7, a collector and a positive electrode were manufactured in the same manner as in Example 7, except that the adhesion enhancing composition was used in an amount applied such that a thickness of the formed adhesion enhancing layer was 1300 nm.

### Example 9

With respect to Example 6, a collector and a positive electrode were manufactured in the same manner as in Example 6, except that the adhesion enhancing composition prepared in Example 3 was used instead of the adhesion enhancing composition prepared in Example 1. In this case, the adhesion enhancing composition was used in an amount applied such that a thickness of the formed adhesion enhancing layer was 500 nm.

### Example 10

With respect to Example 6, a collector and a positive electrode were manufactured in the same manner as in Example 6, except that the adhesion enhancing composition prepared in Example 4 was used instead of the adhesion enhancing composition prepared in Example 1. In this case, the adhesion enhancing composition was used in an amount applied such that a thickness of the formed adhesion enhancing layer was 800 nm.

### Example 11

With respect to Example 6, a collector and a positive electrode were manufactured in the same manner as in Example 6, except that the adhesion enhancing composition prepared in Example 5 was used instead of the adhesion enhancing composition prepared in Example 1. In this case, the adhesion enhancing composition was used in an amount applied such that a thickness of the formed adhesion enhancing layer was 500 nm.

### Comparative Example 6

With respect to Example 6, a collector and a positive electrode were manufactured in the same manner as in Example 6, except that the adhesion enhancing composition prepared in Comparative Example 1 was used instead of the adhesion enhancing composition prepared in Example 1. In this case, the adhesion enhancing composition was used in an amount applied such that a thickness of the formed adhesion enhancing layer was 500 nm.

### Comparative Example 7

With respect to Example 6, a collector and a positive electrode were manufactured in the same manner as in Example 6, except that the adhesion enhancing composition prepared in Comparative Example 2 was used instead of the adhesion enhancing composition prepared in Example 1. In this case, the adhesion enhancing composition was used in an amount applied such that a thickness of the formed adhesion enhancing layer was 400 nm.

### Comparative Example 8

With respect to Example 7, a collector and a positive electrode were manufactured in the same manner as in Comparative Example 7, except that roll pressing was performed at 60 °C. In this case, the adhesion enhancing composition was used in an amount applied such that a thickness of the formed adhesion enhancing layer was 400 nm.

### Comparative Example 9

With respect to Example 6, a collector and a positive electrode were manufactured in the same manner as in Example 6, except that the adhesion enhancing composition prepared in Comparative Example 3 was used instead of the adhesion enhancing composition prepared in Example 1. In this case, the adhesion enhancing composition was used in an amount applied such that a thickness of the formed adhesion enhancing layer was 500 nm.

### Comparative Example 10

With respect to Example 6, a collector and a positive electrode were manufactured in the same manner as in Example 6, except that the adhesion enhancing composition prepared in Comparative Example 4 was used instead of the adhesion enhancing composition prepared in Example 1. In this case, the adhesion enhancing composition was used in an amount applied such that a thickness of the formed adhesion enhancing layer was 500 nm.

### Comparative Example 11

With respect to Example 6, a collector and a positive electrode were manufactured in the same manner as in Example 6, except that the adhesion enhancing composition prepared in Comparative Example 5 was used instead of the adhesion enhancing composition prepared in Example 1. In this case, the adhesion enhancing composition was used in an amount applied such that a thickness of the formed adhesion enhancing layer was 500 nm.

### Experimental Example

### Experimental Example 1: Measurement of scratch resistance of adhesion enhancing layer

The scratch resistance of an adhesion enhancing layer was measured for each collector having the adhesion enhancing layers prepared in Examples 6 to 12 and Comparative Examples 6 to 11, and the results are shown in Table 1 below.

The scratch resistance was measured under two different conditions.

### (1) Scratch resistance 1 (5 cycles)

The scratch resistance was measured using Ocean Science's Rubbing Tester (model name COAD.105), and Mujincheon (product number: CF-909) of SEOUL SEMITECH was used as a scratcher for the portion in contact with a sample surface.

The scratcher was cut into 3 cm × 3 cm (width X length) and fixed to a scratcher holder using a jig, and each collector was cut into 3 cm × 15 cm (width X length) to prepare a sample, which was then fixed with magic tape (3M) to a sample measuring portion such that a surface in contact with the scratcher was an adhesion enhancing layer. In this case, the sample was fixed by attaching the magic tape to four sides so as not to touch the surface in contact with the scratcher. Thereafter, a weight of 50 g was placed on the scratcher to apply a load, and the presence of scratches after 5 cycles at a rate of 30 cycles per minute was checked. The sample measured once was discarded even with no scratches, and in the case of no scratches, the measurement was continued by increasing the load by 50 g, and a maximum load at which no scratches took place was recorded as a scratch resistance value. In this case, the criterion for determining that scratches do not take place is when there are no scratches at all or when the number of scratches generated is 1 or less, and even when the number of scratches was 1 but a length of the scratch was 6 cm or greater, it was considered that the scratch occurred.

### (2) Scratch resistance 2 (stretch resistance after electrolyte resistance)

Each collector was cut into 3 cm × 15 cm (width × length) to prepare a sample, and the sample was sufficiently soaked in 3 ml of electrolyte (LiPF₆ 1 mol in EC:EMC=3:7 vol%, VC=2 wt%), sealed in an aluminum pouch, and left at 70 °C for one week. Then, the sample was washed with 20 ml of DMC for 5 minutes, dried at 70 °C for 10 minutes, and scratch resistance was measured in the same manner as in the above scratch resistance 1.

**[Table 1]**

| Item | Example | | | | | | Comparative Example | | | | | |
|---|---|---|---|---|---|---|---|---|---|---|---|---|
| | 6 | 7 | 8 | 9 | 10 | 11 | 6 | 7 | 8 | 9 | 10 | 11 |
| Scratch resistance 1 (g) | 500 | 500 | 500 | 500 | 500 | 500 | 50 | 100 | 100 | 400 | 100 | 300 |
| Scratch resistance 2 (g) | 500 | 500 | 500 | 500 | 500 | 500 | 50 | 50 | 50 | 300 | 100 | 100 |

Table 1 shows that the adhesion enhancing layers of the collectors of Examples 6 to 11 had remarkably excellent scratch resistance compared to Comparative Examples 6 to 11. Specifically, the adhesion enhancing layers of the collectors of Examples 6 to 11 exhibited remarkably excellent scratch resistance without deterioration in both scratch resistance 1 and 2.

On the other hand, in Comparative Examples 6 to 11, the scratch resistance 1 was significantly degraded compared to Examples 6 to 11, and in the case of scratch resistance 2, it was shown that the scratch resistance was more significantly degraded even compared to the scratch resistance 1.

### Experimental Example 2: Evaluation of adhesion and interfacial resistance

Adhesion and interfacial resistance between the collector and the positive electrode active material layer of each positive electrode of Examples 6 to 11 and Comparative Examples 6 to 11 were measured, and the results are shown in Table 2 below.

### (1) Measurement of adhesion

Adhesion was measured using a Texture Analyzer (XT plusC Texture Analyzer, Stable Micro Systems Co.). The measurement mode was set to a 90° peel test reciprocating, the speed at which the electrode was removed was set to 100 mm/min, the measurement length was set to 50 mm, and the speed to return to an original position after measurement was set to 300 mm/min.

Samples were prepared by punching each positive electrode into 2 cm × 10 cm (width × length). Using glass as a base plate (2.5 cm × 7.5 cm × 1 mm) (width × length × thickness), and double-sided tape (3M) was attached to the glass, and then a short side of the sample was positioned to coincide with an end of the short side of the glass substrate, and the double-sided tape and one side of the sample were bonded. In this case, a sample attached to the other short side of the glass substrate is separated by about 5 mm, and fixed to a TA sample stand so that a glass surface of the glass substrate to which the sample was not attached faced downward, and one end of the sample not attached to the double-sided tape was placed perpendicular to the glass substrate and fixed to the TA sample holder. When measuring adhesion, a pulley was connected so that the angle of the sample standing vertically remained 90° with the glass substrate (bottom surface) to measure the adhesion, thereby obtaining a graph (adhesion/time).

The average of force in 10 to 20 seconds when the adhesion was measured, and the average of force required to return to the original position were obtained, and a difference between the two averages was calculated as the adhesion. Each of the five samples was measured and the average values were shown as the results.

### (2) Measurement of interfacial resistance

Interfacial resistance was measured using an MP Tester (XF-057, Hioki E.E. Co., Japan). A sample was prepared by punching out each positive electrode to 5 cm × 5 cm (width × height), and a positive electrode active material layer was fixed to face upward to the sample measuring portion, a thickness of the sample (positive electrode), a thickness of an aluminum foil, and a specific resistance value (2.82×10⁻⁶ Ωcm) of a collector were each input and measured by setting the conditions to 100 *µ*A, slow speed, 0.5 V, and 30 times of max iteration number. Each measurement was performed three times, and an average value thereof was obtained to show a result value.

**[Table 2]**

| Item | Example | | | | | | Comparative Example | | | | | |
|---|---|---|---|---|---|---|---|---|---|---|---|---|
| | 6 | 7 | 8 | 9 | 10 | 11 | 6 | 7 | 8 | 9 | 10 | 11 |
| Adhesion (gf/2 cm) | 48. 4 | 43. 8 | 74. 6 | 45. 4 | 77. 2 | 45. 6 | 32 | 43. 6 | 25. 2 | <5 | 40. 5 | 30. 1 |
| Interfacial resistance (Qcm) | 0.4 4 | 0.4 2 | 0.2 9 | 0.4 9 | 0.3 2 | 0.5 2 | 0.9 9 | 0.6 4 | 0.7 9 | 0.4 1 | 0.6 4 | 1.0 7 |

As shown in Table 2, it is seen that Examples 6 to 11 had significantly greater adhesion and lower interfacial resistance than Comparative Examples 6 to 11. Specifically, Examples 6 to 11 exhibited excellent adhesion and also reduced interfacial resistance.

On the other hand, in Comparative Examples 6 to 11, the adhesion was greatly deteriorated, the interfacial resistance was greatly increased by two times or more compared to Examples, or the deterioration in adhesion and a sharp increase in interfacial resistance were caused together.

The results of Tables 1 and 2 above show that the collector and the positive electrode including the adhesion enhancing layer according to the present invention is manufactured from an adhesion enhancing composition including a fluorine-based polymer binder in a specific content and satisfying a specific ratio between a first water-soluble binder and a second water-soluble binder, and thus have remarkable improvements in both adhesion and interfacial resistance in a balanced manner.

## Claims

1. An adhesion enhancing composition comprising a fluorine-based polymer binder, a first water-soluble binder, a second water-soluble binder, and a conductive material,
wherein the first water-soluble binder is carboxymethylcellulose (CMC),
the second water-soluble binder is at least one type selected from polyvinylpyrrolidone (PVP) and polyvinyl alcohol (PVA),
the adhesion enhancing composition comprises the fluorine-based polymer binder in an amount of 40 wt% or greater with respect to 100 wt% of a solid content of the adhesion enhancing composition, and
a weight ratio of the first water-soluble binder to a total amount of the first water-soluble binder and the second water-soluble binder is 0.2 to 0.8.

2. The adhesion enhancing composition of claim 1, wherein the adhesion enhancing composition comprises the fluorine-based polymer binder in an amount of 40 wt% to 80 wt% with respect to 100 wt% of a solid content of the adhesion enhancing composition.

3. The adhesion enhancing composition of claim 1, wherein a weight ratio of the first water-soluble binder to a total amount of the first water-soluble binder and the second water-soluble binder is 0.2 to 0.7.

4. The adhesion enhancing composition of claim 1, wherein a weight ratio of the fluorine-based polymer binder and the water-soluble binder is 2:1 to 10:1, and
the water-soluble binder is a sum of the first water-soluble binder and the second water-soluble binder.

5. The adhesion enhancing composition of claim 1, wherein the fluorine-based polymer binder is polyvinylidene fluoride (PVDF) or a vinylidene fluoride-hexafluoropropylene copolymer (PVDF-co-HFP).

6. The adhesion enhancing composition of claim 1, wherein the fluorine-based polymer binder is a vinylidene fluoride-hexafluoropropylene copolymer (PVDF-co-HFP), and
the fluorine-based polymer binder comprises a vinylidene fluoride unit and a hexafluoropropylene unit in molecules in a molar ratio of 60:40 to 80:20.

7. The adhesion enhancing composition of claim 1, wherein a weight ratio of the fluorine-based polymer binder and the conductive material is 4: 1 to 1: 4.

8. A collector comprising:
a metal layer: and
an adhesion enhancing layer provided on at least one surface of the metal layer,
wherein the adhesion enhancing layer comprises the adhesion enhancing composition of claim 1.

9. The collector of claim 8, wherein the adhesion enhancing layer comprises a fluorine-based polymer binder in an amount of 40 wt% or greater, and
the adhesion enhancing layer comprises a first water-soluble binder and a second water-soluble binder, wherein a weight ratio of the first water-soluble binder to a total amount of the first water-soluble binder and the second water-soluble binder is 0.2 to 0.8.

10. A positive electrode comprising:
the collector of claim 8; and
a positive electrode active material layer,
wherein the positive electrode active material layer is provided on an adhesion enhancing layer of the collector.

11. The positive electrode of claim 12, wherein the positive electrode active material layer comprises lithium iron phosphate.

12. A method for manufacturing the positive electrode of claim 10, the method comprising steps of:
applying an adhesion enhancing composition comprising a solvent, a fluorine-based polymer binder, a first water-soluble binder, a second water-soluble binder, and a conductive material on at least one surface of a conductive metal, and drying the adhesion enhancing composition to form an adhesion enhancing layer; and
placing a positive electrode active material thin film on the adhesion enhancing layer and roll pressing the positive electrode active material thin film,
wherein the first water-soluble binder is carboxymethylcellulose (CMC),
the second water-soluble binder is at least one type selected from polyvinylpyrrolidone (PVP) and polyvinyl alcohol (PVA),
the adhesion enhancing composition comprises the fluorine-based polymer binder in an amount of 40 wt% or greater with respect to 100 wt% of a solid content of the adhesion enhancing composition, and
a weight ratio of the first water-soluble binder to a total amount of the first water-soluble binder and the second water-soluble binder is 0.2 to 0.8.

13. The method of claim 12, wherein the roll pressing is performed at a temperature higher than a melting point of the fluorine-based polymer binder.

14. The method of claim 12, wherein the fluorine-based polymer binder is polyvinylidene fluoride (PVDF) or a vinylidene fluoride-hexafluoropropylene copolymer (PVDF-co-HFP) .

15. The method of claim 12, wherein the positive electrode active material is lithium iron phosphate.

16. A lithium secondary battery comprising the positive electrode according to claim 10, a negative electrode, a separator interposed between the positive electrode and the negative electrode, and an electrolyte.
